Europäisches Patentamt

European Patent Office

Office européen des brevets

(11) Publication number: **0 352 741**
**A2**

## (12) EUROPEAN PATENT APPLICATION

(21) Application number: **89113701.0**

(22) Date of filing: **25.07.89**

(51) Int. Cl.⁴: **G09G 1/00 , G06F 3/033**

(30) Priority: **29.07.88 US 226341**

(43) Date of publication of application:
**31.01.90 Bulletin 90/05**

(84) Designated Contracting States:
**DE ES FR GB IT SE**

(71) Applicant: **Hewlett-Packard Company**
**3000 Hanover Street**
**Palo Alto California 94304(US)**

(72) Inventor: **Mathis, Barry R.**
**1433 McBain Avenue**
**Campbell California 95008(US)**
Inventor: **Kobara, Shizunori S.**
**301 Spinnaker Street**
**Foster City California 94404(US)**

(74) Representative: **Liesegang, Roland, Dr. et al**
**FORRESTER & BOEHMERT**
**Widenmayerstrasse 4**
**D-8000 München 22(DE)**

(54) **Three dimensional graphic interface.**

(57) A comprehensive imaging effect is employed with respect to all components (32,34,40-54), and elements of those components, appearing in a graphic interface (30) to present a cohesive three-dimensional visual metaphor to a computer user. The approach that is employed to achieve the imaging effect basically involves the use of at least three different colors, e.g. three different shades of a color, to represent highlighting and shading along opposite edges of each component. Menu boxes (40) and the like are also represented in this manner to provide a visual representation of an integrated, three-dimensional structure. Shadows are displayed in a manner which conforms to the topology of illustrated components upon which they are cast, to reinforce the three-dimensional appearance of the display.

Fig. 2

## THREE DIMENSIONAL GRAPHIC INTERFACE

Background of the Invention

The present invention is directed to an interface between a user of a computer and the program or programs being executed on the computer. More particularly, the invention is directed to a graphic interface which presents a cohesive three-dimensional appearance to thereby provide a realistic and comprehensible view of the tasks being carried out on the computer.

To execute a program on a computer, it is necessary for the user to enter commands which are associated with the particular program being executed. Users who frequently run a program are typically familiar with the commands for the program, and can therefore enter them without the need to refer to documentation or to be prompted by the program itself in order to determine the appropriate commands. However, with the widespread popularity of personal computers and the proliferation of software written for those computers, many users are not intimately familiar with all of the necessary commands and protocols for the various programs they may desire to run. As a result, many programs are written in a "user-friendly" format, by which the user is apprised of the functions capable of being performed by the program and prompted for appropriate commands through the use of menus and/or symbols which appear on the video screen for the user's terminal. When a user selects a particular function to be performed, a display of the choices available to the user within the context of that function may appear on the screen in one of a possible number of formats. When a particular item is chosen from the displayed options, the user may be prompted for additional selections that enable the function to be carried out according to his or her desires.

As a further step toward the objective of easing the user's comprehension and access to program functionality, some programs have employed a visual metaphor of a desktop to serve as an interface between the user and the program. In this visual metaphor, information relating to each program that is being executed, as well as each task being performed within the program, is displayed on a preselected area of the screen, often referred to as a "window". The various windows on a screen can be likened to sheets of paper lying on a desktop. The window pertaining to the program currently being executed, or the task within that program that is currently being performed, is typically represented as overlaying the other windows on the screen, in much the same manner as the sheet of paper or file relating to a current task would lie on top of papers or files on a desktop relating to other active tasks. This approach to presenting the information to the user on the video screen enables the user to act upon the current task appearing in an active window, but to be conscious of other tasks to be performed as represented by the visible portions of other windows appearing on the screen.

While the use of the visual metaphor has greatly enhanced the user's ability to manage the execution of a program, it is desirable to provide an improved form of graphic interface which further increases the user's capabilities in this regard. More particularly, the visual metaphors that have been employed in the past have been largely two-dimensional in nature. In other words, the windows associated with various programs and tasks can be arranged anywhere within the width and height of the video screen. If a number of windows are presented at one time, it can be appreciated that the screen can begin to appear cluttered, in much the same manner as a desk with a large number of papers on it. For example, various types of multi-tasking software enable two or more applications to be run on a computer simultaneously. If each application has a number of individual windows associated with it, the video screen will quickly become filled with portions of windows.

In a real world situation, when large numbers of papers or files begin to accumulate on a desk, they are often stacked upon one another, to maintain organization. However, when windows are stacked upon one another in a two-dimensional desktop metaphor, the user loses sight of all but the topmost window. Accordingly, it is desirable to give the impression of depth, as well as height and width to the visual metaphor, in order to provide the user with a more realistic, and hence more easily manageable, representation of his work load. Further in this regard, it is desirable to provide each of the elements used in the metaphor with the attributes of physical objects, to thereby provide more realistic feedback to the user as he or she selects and operates upon individual elements to control the program.

Brief Statement of the Invention

In accordance with the present invention, a comprehensive approach is used to represent a characteristic depth, as well as height and width, for each of the elements that is employed to provide information to the user, to thereby present a cohesive three-dimensional appearance to the entire visual metaphor being employed as the interface. In one aspect of the invention, every graphic element, such as a window border, an icon, or a box, is represented with the use of at least three shades of color. The body of the element is represented by a main, or base color. One edge of the element, or preferably two adjacent edges (for rectangular elements), are highlighted with a lighter shade of color, and the opposite edge or adjacent edges are shaded with a darker shade of color. This approach causes each element to appear as if it is raised or recessed relative to a background surface, in dependence upon the respective edges which are chosen for the highlighting and the shading.

In a further aspect of the invention, this approach is also applied to individual features of symbols shown within elements as well as to the borders of the elements themselves. Thus, the image of an object represented within an icon appears to be raised above or recessed below a base surface, to provide the three dimensional effect. In a further application of this approach, elements such as boxes are appropriately highlighted and shaded to provide the appearance of a solid object having mass within a window, and the components typically contained within such boxes, such as selection buttons or bars, are highlighted and shaded to appear as devices mounted on this solid object.

In another aspect of the invention, shadows are employed to provide the impression that multiple windows are spaced from one another in a depth direction. To further enhance the realistic impression, the edges of the shadows are contoured in accordance with the topology of the underlying objects upon which they are cast. To insure that the shadows do not obliterate underlying windows, they can be made transparent so that the user can determine the contents of windows lying beneath the shadow.

The manner in which the invention achieves a comprehensive three-dimensional appearance to the visual metaphor is explained in greater detail hereinafter with reference to specific examples and embodiments illustrated in the accompanying drawings.

Brief Description of the Drawings

Figures 1A-1C are illustrations contrasting conventional two dimensional representations of icons with the three-dimensional approach employed in the present invention;

Figure 1D is an enlarged view of a three-dimensional icon similar to that shown in Figure 1A, illustrating the highlighting and shading of the border of the icon in greater detail;

Figure 2 is an illustration of a window containing various components that are presented in accordance with the principles of the present invention;

Figure 2A is an enlarged view of a portion of the dialog box panel illustrated in Figure 2;

Figure 3 is an illustration of a partial window containing a menu;

Figure 4 is an representation of a video display containing several windows; and

Figure 5 is a block diagram illustrating the architecture of a system for implementing the present invention.

Description of the Illustrated Embodiments

As noted above, an underlying concept of the present invention is to employ a comprehensive approach to the three-dimensional depiction of elements on a screen, to provide the user with the impression that the entire image being viewed has depth and that individual objects within the image have solidity and mass. It was known in the past to employ drop shadows to individual elements in an attempt to impart a three-dimensional characteristic to those particular elements. Basically, a drop shadow consists of a dark, opaque line appearing along the right hand and lower edges of an object, such as a menu. This dark line has a constant width, typically one or two pixels. Even when drop shadows are employed on selective objects, however, the overall image appearing on the screen still appears to be only two-dimensional in nature. In contrast, through the comprehensive application of three-dimensional imaging effects to all of the elements displayed in an image, the graphic interface of the present invention provides a cohesive appearance which gives a realistic three-dimensional impression.

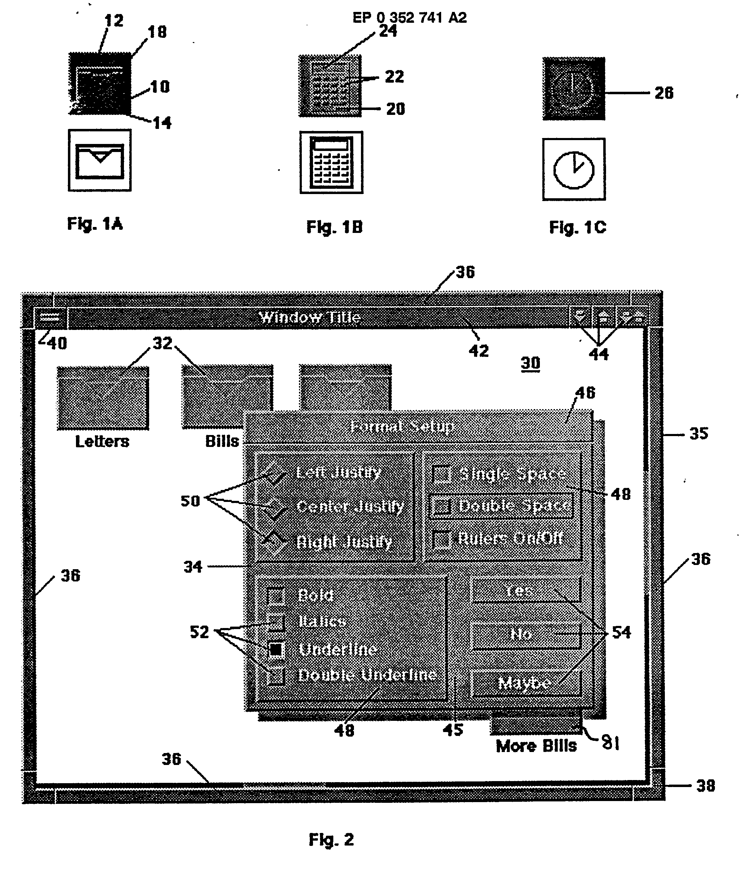

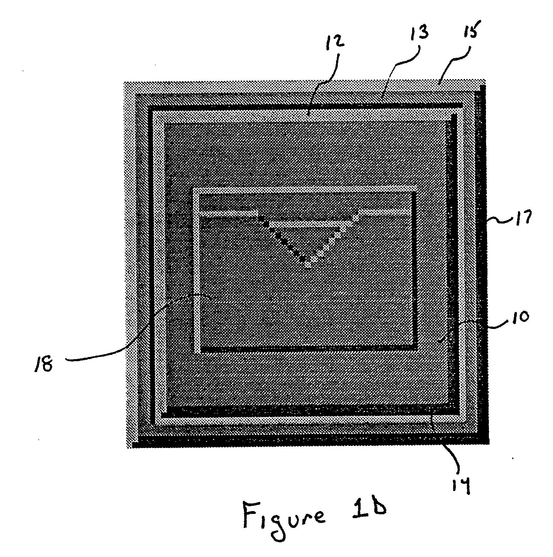

The imaging effects which are employed in the context of the present invention will first be explained with reference to individual components that can appear in a displayed interface. In the illustrated embodiments, the particular components which are used to illustrate these effects are icons. Figures 1A, 1B and 1C respectively illustrate images of icons for a folder, a calculator and a clock. The three-dimensional images of these icons, generated in accordance with one aspect of the present invention, are shown at the top of each figure, and contrasted with conventional two-dimensional depictions of the icons shown at the bottom of each figure.

Referring to Figure 1A, the body 10 of the component or element, i.e., the icon of a folder, is represented on the video screen by means of a base, or main color. I n addition to the main color that is used for the body 10 of the element, a lighter color 12 and a darker color 14 are employed to indicate the edges of the element in a manner which creates a three-dimensional effect. For each of the elements depicted in Figures 1A, 1B and 1C, the upper and left-hand edges of the element are indicated by a lighter color 12, and the opposite edges, i.e., the lower and right-hand edges, are indicated by a color 14 which is darker than the base color. By means of this arrangement, a three-dimensional impression is created in which it appears that a light from an imaginary source is shining over the user's left shoulder onto the element. If desired, it is possible to highlight and shade only two opposite edges of the icon, rather than all four edges. For example, the top edge could be highlighted and the bottom edge shaded, while the two side edges are defined by the main color. In this example, a light would appear to be shining from a location directly above the user.

Throughout the following description of the invention, the term "color" is to be interpreted in a general sense to refer to video images displayed on monochrome monitors as well as those appearing on so-called color monitors which present images having red, green and blue components. Thus, reference in the text to "lighter" and "darker" colors refers not only to different hues or tones of the colors, but also to different gray scale values for a monochrome color.

The use of highlighting and shading on opposite edges of the component is illustrated with greater clarity in Figure 1D, which comprises an enlarged view of an icon similar to that shown in Figure 1A. This icon differs slightly from that shown in Figure 1A, however, in that it is provided with an outer border or frame 13. This outer frame is also represented by the main color, and its edges are appropriately highlighted, at 15, and shaded, at 17, in a manner consistent with the highlighting and shading of the edges of the main body of the icon itself.

The use of the lighter and darker colors is employed not only for the border of the component itself, but also to indicate the individual features of any object or symbol displayed within the component. Thus, with reference to Figures 1A and 1D, the upper and left hand edges of the layers of the folder 18 are highlighted by means of the lighter color, and the lower and right-hand edges of the folder are shaded by the darker color. Thus, the folder itself appears as a three-dimensional object which is raised above a surface defined by the body 10 of the icon.

In general, the three-dimensional effect is attained with the use of three colors, a base color, a lighter highlight color and a darker shading color. In a preferred embodiment of the invention, the highlight color is about 35-45% lighter than the base color, most preferably 40% lighter, and the darker color is also about 35-45% darker, and most preferably 40% darker, than the base color. If desirable, more than three colors can be employed. For example, the colors which are used to highlight and shade the edges of the folder 18 could be different from those used to indicate the borders of the icon itself.

In the folder icon depicted in Figure 1A, all of the upper and left-hand edges of the icon border and the individual folder features are highlighted whereas the lower and right-hand edges of each feature are shaded, to create the impression of raised elements. Referring to Figure 1B, a similar approach is employed for the body 20 of the calculator and each of its buttons 22, to again create the impression that the calculator rises above the surface of the icon and the buttons project upward from that body. However, an opposite arrangement is employed for the display 24 of the calculator, to create the impression that it is recessed within the body 20. More particularly, the upper and left-hand edges of the display are shaded with the darker color, whereas the lower and right-hand edges are highlighted with the lighter color. A similar approach is used in the clock icon of Figure 1C, in which the upper and left-hand edges of the clock are shaded while the lower and right-hand edges are highlighted, to create the impression that the face 26 of the clock is recessed into the surface of the icon. A consistent approach is used for the highlighting and shading throughout the image, in accordance with the location of the imaginary light source noted previously.

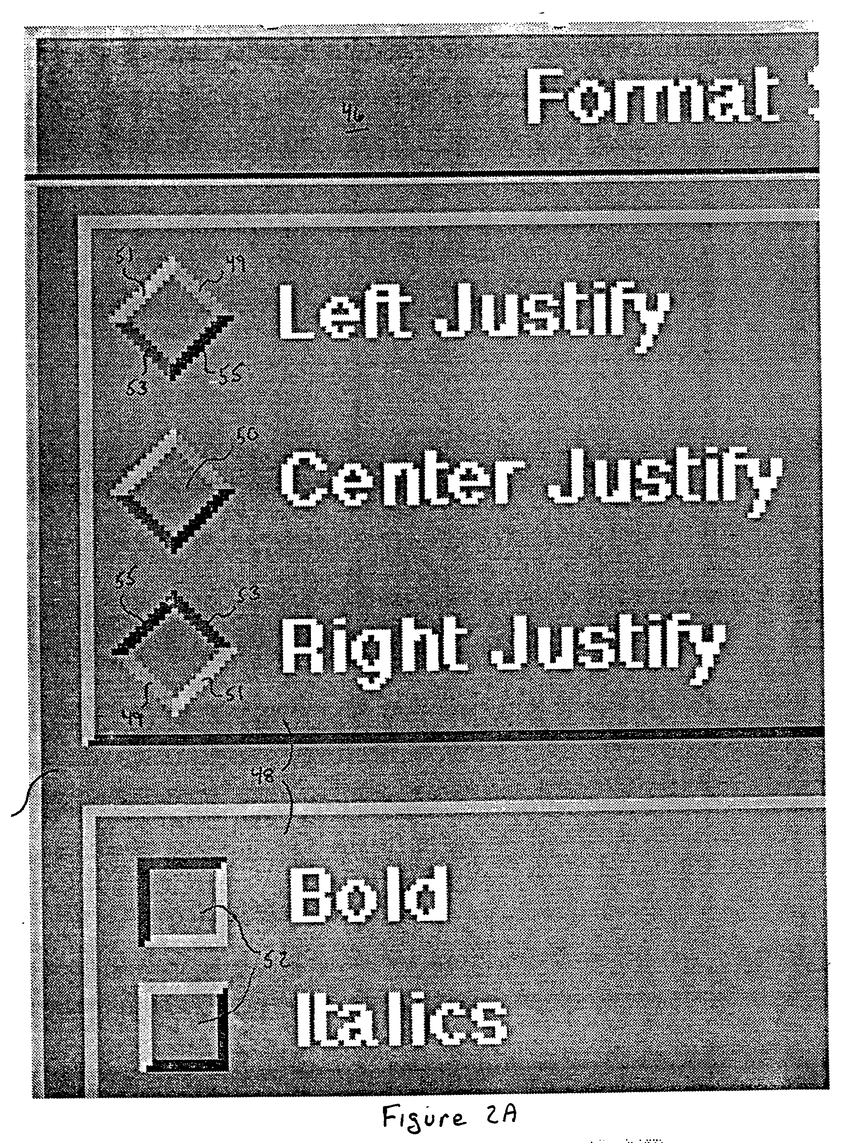

Figure 2 illustrates the manner in which these imaging techniques are applied to the total display to provide a comprehensive three-dimensional impression. This figure depicts a single window 30 that may relate to a word processing system. The window 30 contains depictions of folders 32 relating to different files that can be opened by the user, and a dialog box 34, which enables users to configure the format of documents.

The border of the window 30 is defined by a frame 35. In accordance with the principles of the present invention, the individual elements which make up the frame are provided with the highlighting and shading, as described in reference to the previous figures. Thus, the upper and left hand edge of each elongated piece 36 of the frame is highlighted, and the lower and right hand edges of these pieces are shaded. If the frame is provided with corner elements 38, for example to assist in the sizing of the window on the video screen, the edges of these elements are similarly highlighted and shaded.

In addition to the frame 36, the top portion of the window is provided with a control menu box 40, a title bar 42, and various sizing boxes 44. These elements can be employed to enable the user to call up a menu relating to basic functions associated with the window, relocate the window in the video display, and change the size of the window on the screen or iconize the window, for example. Again, each of these components is provided with the highlighting and shading to maintain the three-dimensional appearance of the displayed structure. Similarly, symbols illustrated within each element, such as the space bars on the control menu box 40 and the arrowheads on the sizing boxes 44, can be provided with highlighting and shading, to create the impression of a non-planar topology for the illustrated structure.

When multiple windows are presented on the video screen, it is often helpful to provide an indication to the user of the currently active window. In the context of the present invention, this purpose can be accomplished by increasing the width of the highlighting and shading along the border of the title bar 42 for the active window. This effect creates the impression that the tile bar has popped up above the surface of the window frame, and thus is readily recognizable by the user.

In accordance with another aspect of the invention, the dialog box 34 is presented to the user as a physical structure which has mass and solidity. To this end, the body of the box 34 is illustrated with a main color, and its edges are appropriately highlighted and shaded to create the impression that the box represents a panel 45. If desired, the panel can be provided with a title bar 46 to assist in moving it within the confines of the window 30. The edges of this title bar are also appropriately highlighted and shaded in a manner consistent with the highlighting and shading of the panel itself.

The particular example of a dialog box illustrated in Figure 2 contains three main subjects, which respectively relate to the location of the text on the page, the spacing of lines, and the attributes of characters. These subjects are separated within the panel by means of subpanels 48 which are appropriately highlighted and shaded to indicate that they are raised above the surface of the main panel 45 defining the box. Each subpanel 48 contains a listing of the selections available for the subject of interest, and an appropriate selection component adjacent each listing to enable the user to make a selection. If only one choice can be selected from the available options, as shown, for example, in the upper left hand subpanel relating to the location of the text on the page, the selection components comprise radio buttons 50. Within this panel, the top two radio buttons are depicted as being raised above the surface of the subpanel and the lowest button is provided with an opposite type of shading and highlighting, to create the impression that it is recessed below the surface of the subpanel. In other words, the lowest button appears to have been pushed by the user, to indicate that he has selected the "Right Justify" option. Preferably, this reversing of the highlighting and shading occurs as the user makes the selection, for example by striking an "Enter" key or clicking a mouse button. This type of effect provides the user with the impression that he is interacting with a dynamic element, i.e., a physically moving button, through graphic animation.

If more than one choice can be selected within a particular subject area, the selection components are illustrated as check buttons 52, as shown in the other two subpanels on the menu 34. Again, these check buttons 52 are depicted as being raised above the surface of the subpanel if they have not been selected, and depressed below its surface if the user has selected the options associated with them, to provide the dynamic feedback. When a button is depicted as having been depressed, the main part of the button can remain the same color, as shown with respect to the lowest one of the radiobuttons 50. Alternatively, the center of the button can be inversed, e.g., made dark, as shown with respect to the check button 52 associated with the "Underline" option.

In addition to the subpanels, the main panel 45 also includes three raised buttons 54 which can be selected, or pushed, by the user to respectively indicate whether he or she would like to accept the format options illustrated by the depressed selection components, cancel those selections, or request additional information before confirming the selections.

As can be seen from the illustration of Figure 2, the highlighting and shading of each of the individual components, as well as the panel, creates the overall impression that the dialog box comprises a separate integrated structure having mass, rather than a series of items drawn on a sheet of paper. Figure 2A comprises an enlarged portion of the dialog box panel 45 and subpanels 48 shown in Figure 2, to more clearly illustrate the use of the highlighting and shading. This figure also illustrates the manner in which more than two colors can be used for the highlighting and shading. Referring to each of the radiobuttons, it can be seen that the highlighted edges are defined by a light color 49 and a very light color 51. Similarly, the shaded edges are represented by a dark color 53 and a very dark color 55. Preferably, the very light color 51 and the very dark color 55 are on opposite edges.

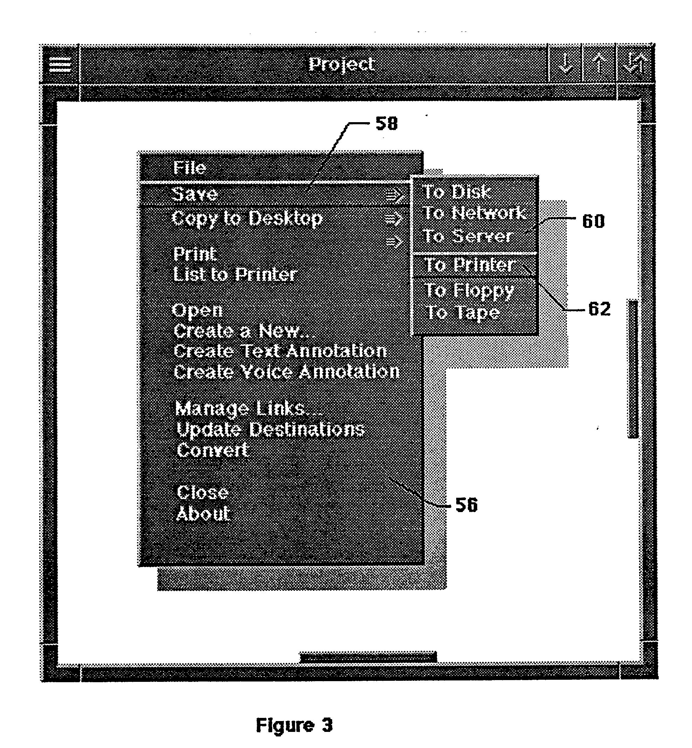

Figure 3 illustrates this aspect of the invention as applied to a menu. Again, the overall menu structure is presented as a panel 56 within the illustrated window. In many applications, it is common to highlight the individual menu selection from the list that is currently being accessed by the user. Typically, such highlighting might be indicated through a reversed background. In accordance with another aspect of the present invention, an indication of the menu selection that is currently being accessed is provided by means of a sculptural change in the surface of the panel. In Figure 3, the selection "Save" is currently being accessed in the menu panel 56. This access is shown by means of an elongated bar 58 which is appropriately highlighted and shaded to present the appearance that it protrudes above the surface of the panel 56. This particular selection has a cascade menu of available choices associated with it. When the "Save" option is chosen, for example, by clicking a mouse button when its pointer is positioned over the raised bar 58, a cascade menu panel 60 appears, and one of the save choices within this cascade menu is shown as a raised bar 62, to indicate that it is the one currently being selected.

As the user moves the screen cursor, pointer or other type of selection indicator, the raised bar appropriately moves with it. For example, with reference to the main menu panel 56, as the user moves from the "Save" option to the "Copy to Desktop" option, the raised bar 58 for the "Save" selection would disappear, and a different raised bar would appear across the width of the menu panel 56 at the location of the "Copy to Desktop" option. Other bars would pop up at appropriate locations as the user continues to move the pointing device. In effect, the raised bar appears to be animated, and travels with the vertical movement of the cursor or screen pointer.

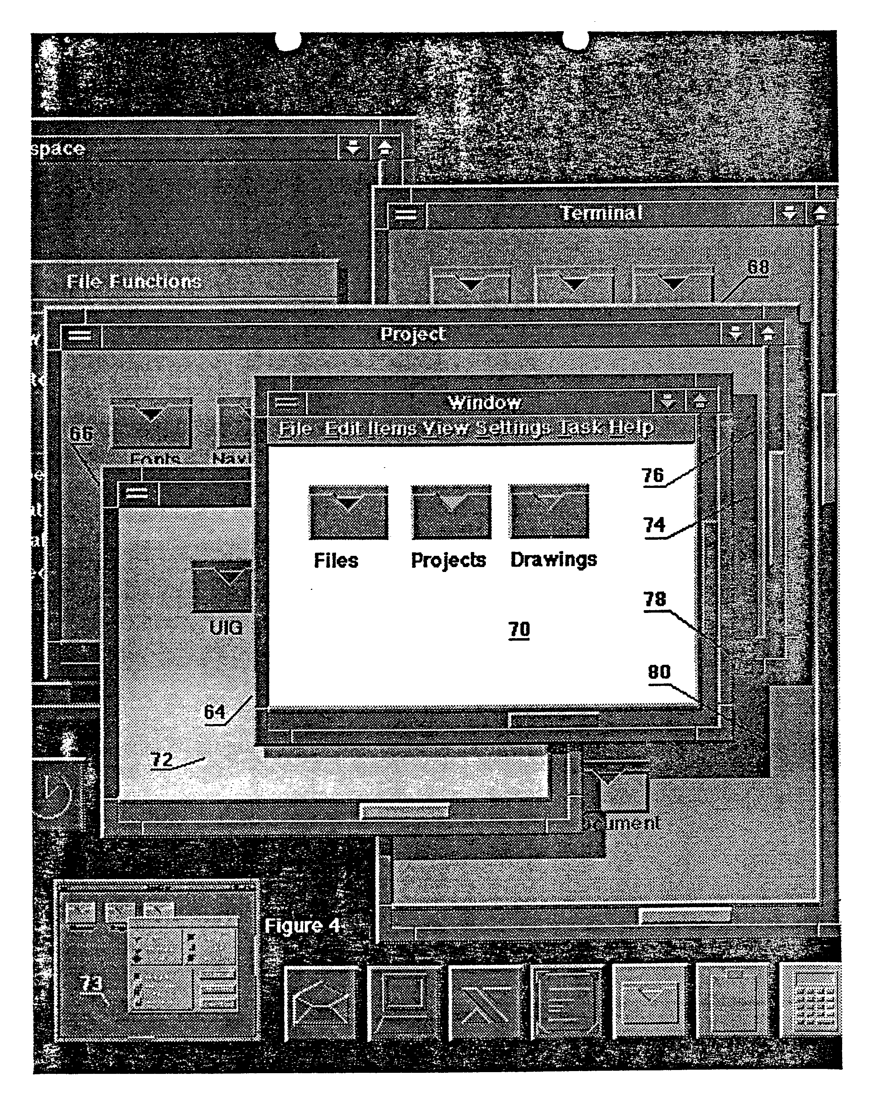

In addition to individual components and integrated structures, multiple windows are presented on the video screen in a fashion which presents the impression that the image has infinite depth, to thereby complete the appearance of being truly three-dimensional in nature. This approach is carried out with the use of shadows and appropriate shading for the individual windows. Figure 4 illustrates an example of a portion of the video screen having six windows and a number of various icons depicted thereon. As is conventional, the active window, i.e., the one within which the user is currently working, can be displayed as the topmost window 64 which overlies all the other windows. If desired, these other windows can be successively displayed as being beneath the active window in order of their usage, i.e., the next most recently used window 66 could appear immediately below the active window 64, the second most recently used window 68 could appear immediately below that, and so on.

To enhance the impression that the windows are spaced from one another in the depth direction, the workspace areas of the windows are represented with successively darker shades of color. Referring to Figure 4, the workspace area 70 of the active window 64 is illustrated with the brightest color, e.g., white. The workspace area 72 of the next lowest window 66 is slightly darker in color, and the workspace areas of the other windows become successively darker as one proceeds in the depth direction. By way of example, the workspace area of each successive window can be 10% darker than the workspace area of the window lying immediately above it. Alternatively, the amount by which each successive window's workspace area becomes darker can be made dependent upon the number of displayed windows, so that the difference in darkness of adjacent windows decreases as the number of windows increases.

To further enhance the impression of depth, the size of a window, including all of its component features and the information contained therein, can be made proportionately smaller as the window becomes located farther back in the display. The window 73 shown in Figure 4 illustrates an example of a window which has been proportionately reduced in size to create the impression that it is located very deep within the displayed image.

Each window is also provided with a shadow to illustrate its displacement from other structures below it. The location of the shadow is consistent with the highlighting and shading applied to individual structures. Thus, for the examples illustrated in the drawings, the shadows are shown to the right and bottom of the associated windows. The widths of the shadows vary from one window to the next, to create the impression that the windows are at varying depths from one another. Further, edges of the shadows are not represented as straight lines, as was conventionally done with drop shadows. Rather, they are contoured in accordance with the topology of the structures upon which they are cast, to further enhance the impression that these structures have a three-dimensional characteristic.

For example, with reference to the right hand edge of the shadow 74 cast by the active window 64, it can be seen its top portion is defined by a relatively straight line 76 where the edge of the shadow lies on the flat workspace for the window 68. At the bottom portion of the frame of the window 68, the edge of the shadow 74 is recessed to the left at 78, to indicate that the frame protrudes above the surface of the workspace for the window. Similarly, below the frame the edge of the shadow 74 extends farther to the right at 80, to indicate that the workspace of the next succeeding window is located at a deeper distance from the active window 64.

In order that the shadows not obliterate too large a portion of the screen, they are preferably made transparent. For example, the shadow can be generated as a see-through window that is represented by an intermediate gray-scale value or color tone and that enables the highlighting and shading of underlying elements to be seen by the user. This color can be about 40% darker than the color upon which the shadow is cast. Thus, the user can readily ascertain the contents of the lower windows even if they have a shadow cast upon them. As a window is moved, the edges of the shadow dynamically shift in accordance with the topology of the lower structures over which the window is being moved.

The use of shadows is not confined to windows. Rather, as shown in Figures 2 and 3, dialog box panels and menu panels can also cast shadows, to further enhance the impression that they are physical structures separate from the window workspace areas. Again, the edges of the shadows are contoured in accordance with the position of any underlying objects, as shown with respect to the icon 81 illustrated in Figure 2, to enforce the impression of depth in the displayed image.

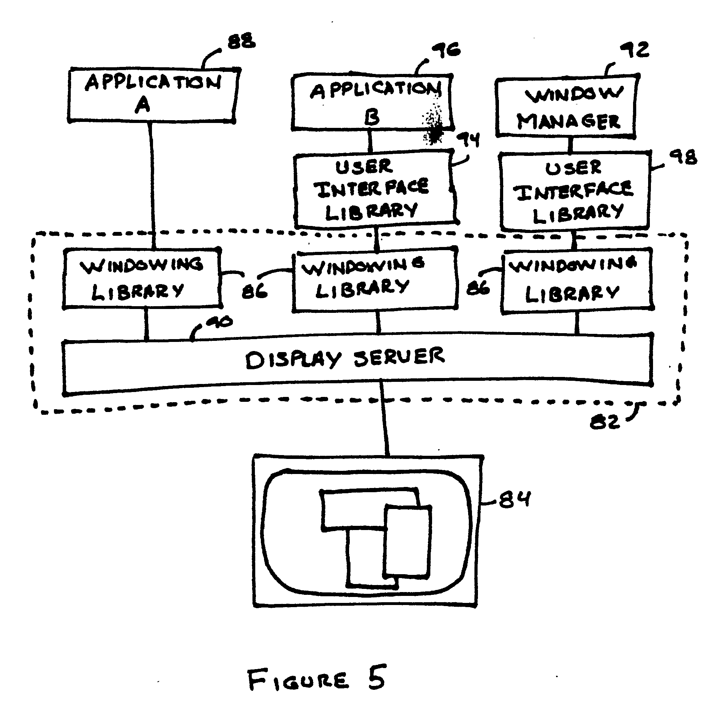

A functional block diagram of a system for implementing the foregoing principles of the present invention is illustrated in Figure 5. The system operates in conjunction with a conventional windowing system 82, such as the X WINDOW SYSTEM developed and distributed by the Massachusetts Institute of Technology (MIT). Basically, the windowing system comprises a set of graphics routines which enable an application to create and manipulate communication regions, i.e., windows, on the screen of a video terminal 84. These routines are contained in windowing libraries 86. When an application program 88 needs to place information on the screen, it requests a window from the windowing system 82. The appropriate routines are called from the windowing library and the necessary graphics are displayed on the screen, along with the data from the applications program, through a display server 90 which accesses the display through the computer's operating system.

To create the three-dimensional effects of the present invention, a window manager 92 and user interface libraries 94 are provided in the system. The user interface libraries 94 contain subroutines for the generation of components that are associated with specific features of the application program. Thus, for example, when an application program 96 requests a window to display a dialog box or a menu, the appropriate subroutines are called from the user interface library to generate the images of the dialog box panel and the buttons on that panel.

The window manager 92 controls the generation of graphic effects which might be considered to be more generic to the overall display rather than specific to an application program. These effects include the shading and highlighting of the frames for individual windows, the highlighting and shading of icons, and the generation of shadows. Again, these effects are created by means of subroutines which may be stored within the window manager itself or in the separate user interface library 98.

In operation, the window manager controls the generation of all of the three-dimensional effects in response to user entered commands that are not specific to an application program. To this end, the window manager, when it is first placed into operation, requests the windowing system to inform it of events which may have an effect upon the displayed image, such as actuation of a mouse button. Whenever such an event occurs, the windowing system notifies the window manager of it through the display server 90. In response, the window manager examines the particular event and determines whether it is one which affects any portion of the display over which it has control, for example actuation of a system menu button If so, the window manager takes the appropriate action, e.g., calling the user interface subroutine to inverse the highlighting and shading of the button to indicate that it has been pushed. If, on the other hand, the event is one over which the window manager does not exercise control, the display server passes the event on to the application program for service thereby.

It will be appreciated by those of ordinary skill in the art that the present invention can be embodied in other specific forms without departing from the spirit or essential characteristics thereof. The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

**Claims**

1. A computer-controlled graphic display for a video screen which provides an interface between one or more application programs being executed on a computer and the user of the computer, **characterized** by at least one window (30;64,66, 68,73) for each application being run on the computer, each window being defined by a framed border (13,35) and containing components which are accessed by the user to implement commands, said framed border being represented on said video sreen by a main color with opposite edges of said border being indicated by at least two other colors (15,17) which are respectively lighter and darker than said main color to simulate a three-dimensional effect for said framed border, and each of said components (18,20,26;32,34,40-54;56-62) being represented by an associated color (10) with opposite edges of said component being indicated by at least two other colors (12,14) that are respectively lighter and darker than said associated color, such that all windows and components appearing on the video screen present the impression of having a depth characteristic as well as height and width.

2. A computer-controlled graphic display for a video screen which provides an interface between one or more application programs being executed on a computer and the user of the computer, **characterized** by a plurality of components (18,20, 26;32,34,40-54;56-62) which indicate respective functions that can be performed by the program and are accessed by the user to implement commands, each of said components being represented by a main color (10) with opposite edges of said component being indicated by at least two other colors (12,14) that are respectively lighter and darker than said main color, such that all components appearing on the video screen present the impression of having a depth characteristic as well as height and width.

3. The graphic display of claim 1 or 2, **characterized** in that at least some of said components comprise icons containing images of respective objects having characteristic features, and that opposite edges of each feature in the image of an object are indicated by said colors which are, respectively lighter and darker than said main or said associated color to provide the impression that the icon comprises a panel having a threedimensional object thereon.

4. The graphic display of claim 1, 2 or 3, **characterized** in that at least one of said components comprises a box (34) whose opposite edges are respectively indicated by said lighter and darker colors to thereby represent a threedimensional panel, and that said box contains further components (48-54) accessible by the user, with opposite edges of said further components also being indicated by said lighter and darker colors to thereby provide the impression that said further components comprise integral raised or recessed elements on said panel.

5. The graphic display of one of claims 1 to 4, **characterized** in that said components include a box (40) containing a menu of commands which are individually selectable by the user, that opposite edges of said box are respectively indicated by said lighter and darker colors to thereby represent a three-dimensional panel, and that the individual command selected by a user is identified by a bar (42) having opposite edges which are respectively indicated by said lighter and darker colors to thereby provide the impression of a raised button on said panel.

6. The graphic display of claim 5, **characterized** in that the edges of the button (40) on said panel are highlighted and shaded in a manner corresponding to the highlighting and shading of the edges of the panel (42) when the command represented by said button is not selected by the user, to thereby create the impression of a raised button, and the edges of the button are shaded and highlighted in an opposite manner when the command represented by the button is selected by the user, to thereby create the impression that the button has been pushed and is recessed within the panel.

7. The graphic display of claim 4, **characterized** in that a shadow is displayed on said screen adjacent each window or panel at a location corresponding to the edges of said framed border or panel which are represented by said darker color.

8. The graphic display of claim 6, **characterized** in that the borders of said shadow that are away from said window or said panel are contoured in accordance with the simulated threedimensional topology of elements that are displayed as being beneath said window or said panel.

9. The graphic display of claim 7 or 8, **characterized** in that said shadow (74) is created by means of a transparent, darkened window on said display.

10. The graphic display of one of claims 7 to 9, **characterized** in that said shadow (74) has a color that is about 40% darker than the color of the element upon which the element is cast.

11. The graphic display of one of claims 1 to 10, **characterized** in that said lighter color is about 35-45% lighter than said main color, and said darker color is about 35-45% darker than said main color.

Fig. 1A

Fig. 1B

Fig. 1C

EP 0 352 741 A2

Window Title

Format Setup

Letters

Bills

Left Justify

Center Justify

Right Justify

Single Space

Double Space

Rulers On/Off

Bold

Italics

Underline

Double Underline

Yes

No

Maybe

More Bills

Fig. 2

Figure 1b

Figure 2A

**Figure 3**

Figure 4

FIGURE 5